# EUROPEAN PATENT APPLICATION

(11) **EP 4 660 150 A1**
(43) Date of publication of application: **10.12.2025**
(21) Application number: 24749870.2
(22) Date of filing: 09.01.2024
(51) Int. Cl.: C02F 1/00

(54) **PROCESS CALCULATION METHOD FOR WATER TREATMENT PROCESS, CALCULATION PROGRAM, AND CALCULATION SYSTEM**

(30) Priority: 30.01.2023 JP 2023011786
(71) Applicant: Toray Industries, Inc., Tokyo 103-8666 (JP)
(72) Inventor: KAWASHIMA Yoshiyuki, Otsu-shi, Shiga 520-8558 (JP)
(74) Representative: Hoefer & Partner Patentanwälte mbB
(86) International application number: PCT/JP2024/000200
(87) International publication number: WO 2024/161914

(57) **Abstract**

Provided is a process calculation method for a water treatment process having a plurality of water treatment unit processes, the process calculation method comprising, in a water treatment process flow formed by a step for disposing a unit icon for each water treatment unit process and linking the unit icons: A. a step for determining a calculation order for the unit icons on the basis of a predetermined rule; B. a step for, after the A step, estimating at least one item among the flow rate, water quality, temperature, and water pressure of treated water for each unit icon along the calculation order; C. a step for, after the B step, adjusting the at least one item among the flow rate, water quality, temperature, and water pressure of the treated water estimated in the B step such that no contradiction in mass balance or energy balance arises in the water treatment process flow; and D. a step for, after the C step, assessing the necessity of repeating the execution of the B step and the C step.

## Description

### TECHNICAL FIELD

The present invention relates to a process calculation method, a calculation program, and a calculation system for a water treatment process for obtaining treatment water by treating raw water.

### BACKGROUND ART

In the water treatment process, water treatment devices such as sedimentation separation, flotation separation, centrifugation, coagulation treatment, stirring treatment, aerobic treatment, anaerobic treatment, filtration, squeezing, filter cloth, microfiltration membrane, ultrafiltration membrane, nanofiltration membrane, reverse osmosis membrane, accelerated oxidation, ion exchange, adsorption, absorption, deaeration, crystallization, distillation, heat exchange, mineral addition, and the like are selected or used in combination according to raw water properties and product water applications.

Among these, in recent years, a membrane separation method has characteristics such as energy saving, space saving, and improvement in treatment water quality, and thus has been expanded in various fields. For example, a microfiltration membrane or an ultrafiltration membrane may be applied to a water purification process for producing industrial water or tap water from river water, ground water, or sewage treatment water, and a reverse osmosis membrane may be applied to seawater desalination. In addition, various water treatment processes have been devised and introduced in which, for example, the sedimentation separation, the flotation separation, the centrifugation, and the coagulation treatment are combined as pretreatments of the separation membranes to stabilize the operability of the separation membranes, or the ion exchange is combined with post-treatment of the separation membranes to produce pure water for use.

In these various water treatment processes, a treatment flow of the water treatment process using each water treatment device is predetermined, and the calculation of the water treatment process such as water balance calculation, heat balance calculation, and material balance calculation is generally executed by simulation software on a computer along the treatment flow.

Patent Literature 1 describes a simulation calculation for estimating a steady state of a chemical process using a sequential module type calculation method in which units such as a reactor and a distillation column are connected on a computer to simulate the entire chemical process and a design calculation of the units is performed in order from upstream.

However, in a process including a circulating flow, that is, in a process in which a calculation result of the downstream unit is given to the upstream unit, input information necessary for a calculation is insufficient at the time of calculating the upstream unit, and the calculation cannot be performed, and thus it may be difficult to apply the calculation method.

In addition, Patent Literature 2 describes, in view of the above problem, a simulation calculation for creating a treatment flowchart of a water treatment system, setting an initial value, sequentially calculating a water balance, a heat balance, and a material balance for each of water treatment device units, and then performing a design calculation of the units (calculation of the required number of reverse osmosis membrane elements, a required power of a pump, and the like).

However, in an actual water treatment process, the water balance, the heat balance, the material balance, and the design calculation of the units influence each other, and thus a calculation accuracy may decrease by using the above method. In addition, in the design of the actual water treatment system, design conditions such as the number of reverse osmosis membrane elements may be predetermined due to the limitation of an installation space of the device, and in the above method in which the design calculation is performed last, it is necessary to repeatedly perform the calculation while searching for a water balance, a material balance, and the like satisfying the predetermined design conditions, and thus a lot of time and effort may be required.

### CITATION LIST

### PATENT LITERATURE

Patent Literature 1: JPH07-311762A
Patent Literature 2: JP6107303B

### SUMMARY OF INVENTION

### TECHNICAL PROBLEM

An object of the present invention is to provide a method for accurately and quickly calculating any water treatment process including complicated processes including a circulating flow in a water treatment process for obtaining treatment water by treating raw water.

### SOLUTION TO PROBLEM

In order to solve the above problem, the present invention provides a process calculation method for a water treatment process including a plurality of water treatment unit processes, the method including the following steps A to D for a water treatment process flow formed by arranging unit icons of the water treatment unit processes and performing wiring between the unit icons:
A. a step of determining a calculation order of the unit icons based on a predetermined rule;
B. a step of estimating at least one item among a flow rate, a water quality, a temperature, and a water pressure of treatment water for each of the unit icons according to the calculation order after the step A;
C. a step of adjusting, after the step B, at least one item among a flow rate, a water quality, a temperature, and a water pressure of raw water or treatment water, which is estimated in the step B so that there is no contradiction in a material balance or an energy balance in the water treatment process flow; and
D. a step of determining, after the step C, whether the steps B and C are repeatedly executed.

### ADVANTAGEOUS EFFECTS OF INVENTION

According to the process calculation method for a water treatment process of the present invention, it is possible to accurately and quickly calculate any water treatment processes including complicated processes including a circulating flow, which contributes to accurate and quick design of the water treatment process.

### BRIEF DESCRIPTION OF DRAWINGS

[FIG. 1] FIG. 1 is a flowchart illustrating an example of a water treatment process according to an embodiment.
[FIG. 2] FIG. 2 is a flowchart illustrating an example of a calculation method according to the embodiment.
[FIG. 3] FIG. 3 is a flowchart illustrating an example of the calculation method according to the embodiment.
[FIG. 4] FIG. 4 is a flowchart illustrating an example of the calculation method according to the embodiment.
[FIG. 5] FIG. 5 is a flowchart illustrating an example of the calculation method according to the embodiment.
[FIG. 6] FIG. 6 is a flowchart illustrating an example of the calculation method according to the embodiment.
[FIG. 7] FIG. 7 is a flowchart illustrating an example of the water treatment process according to the embodiment.
[FIG. 8] FIG. 8 is a flowchart illustrating an example of the water treatment process according to the embodiment.
[FIG. 9] FIG. 9 is a flowchart illustrating an example of the water treatment process according to the embodiment.
[FIG. 10] FIG. 10 is a schematic diagram illustrating an example of the embodiment.
[FIG. 11] FIG. 11 is a schematic diagram illustrating an example of the embodiment.

### DESCRIPTION OF EMBODIMENTS

Hereinafter, the present invention will be described in more detail based on embodiments illustrated in the drawings. Hereinafter, a water treatment process flow using an ultrafiltration membrane and a reverse osmosis membrane will be described as an example, but the present invention is not limited to the following embodiments.

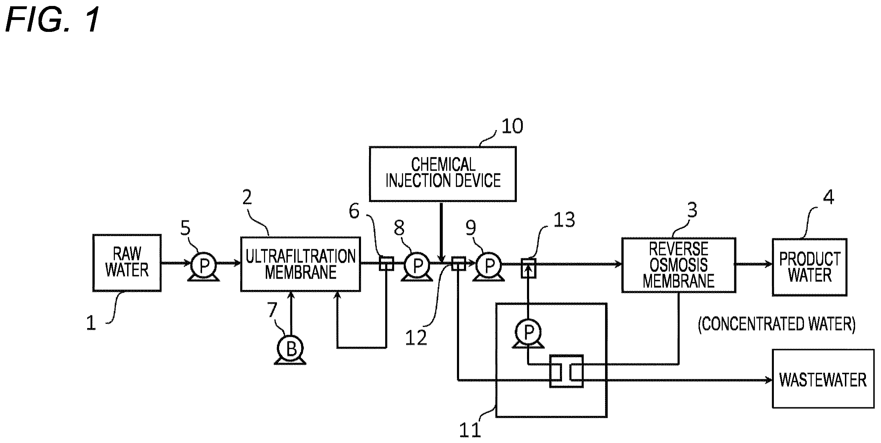

The water treatment process flow of the present embodiment is, for example, as illustrated in FIG. 1, a flow in which raw water 1 is treated by using a membrane treatment method of an ultrafiltration membrane 2 and a reverse osmosis membrane 3 to obtain product water 4. In the water treatment process, there are always three types of water flows, i.e., raw water, product water, and wastewater, and the raw water is treated by each water treatment device and finally separated into the product water and the wastewater. The raw water is a solution to be treated in the water treatment process, and examples thereof include river water, ground water, seawater, sewage treatment water, industrial wastewater, and culture solution.

The raw water 1 is pumped by a raw water pump 5 to the ultrafiltration membrane 2 to be filtered. FIG. 1 illustrates an ultrafiltration membrane, but a microfiltration membrane may also be used. In addition, a pore diameter of a separation membrane used in the ultrafiltration membrane or the microfiltration membrane is not particularly limited as long as it is porous, and membranes having different pore diameters may be used depending on the properties or an amount of desired water to be treated. Examples of a shape of the separation membrane include, but are not limited to, a hollow fiber membrane, a flat membrane, a tubular membrane, and a monolith membrane. A material of the separation membrane preferably includes at least one selected from the group consisting of polyethylene, polypropylene, polyacrylonitrile, ethylene-tetrafluoroethylene copolymer, polychlorotrifluoroethylene, polytetrafluoroethylene, polyvinyl fluoride, tetrafluoroethylene-hexafluoropropylene copolymer, tetrafluoroethyleneperfluoroalkyl vinyl ether copolymer, chlorotrifluoroethylene-ethylene copolymer, polyvinylidene difluoride, polysulfone, cellulose acetate, polyvinyl alcohol, polyethersulfone and inorganic materials such as ceramics. The material of the separation membrane is more preferably polyvinylidene difluoride (PVDF) from the viewpoint of membrane strength and chemical resistance, and is still more preferably polyacrylonitrile from the viewpoint of high hydrophilicity and high stain resistance.

Although the ultrafiltration membrane has been described, it is common that the membrane is inserted into a casing to form a module, and a plurality of the modules are used to form a unit depending on operating conditions (raw water properties and amount of filtrated water). A membrane filtration method may be a dead end filtration type module or a cross-flow filtration type, and the dead end filtration type is preferable from the viewpoint of low energy consumption. Further, the module may be a pressurized type or an immersed type, and the pressurized type is preferable from the viewpoint that a high flow flux operation is possible. In addition, the module may be an external pressure type in which raw water is supplied from the outside of the membrane to obtain permeated water from the inside of the membrane or an internal pressure type in which raw water is supplied from the inside of the membrane to obtain permeated water from the outside of the membrane, and the external pressure type is preferable from the viewpoint of simplification of pretreatment.

FIG. 1 illustrates a pressurized type ultrafiltration membrane. In the case of an immersed type separation membrane, although not illustrated, in order to filter a liquid to be treated with the immersed type separation membrane, a pump or the like may be provided on a secondary side of immersed type membrane separation to perform suction, or the liquid to be treated may be filtered using a head pressure difference as a driving force by making a liquid level in a filtrated water tank lower than a liquid level in a tank for a liquid to be treated.

In the case of immersed type membrane separation, air washing is performed continuously or intermittently with air supplied from an air blower. Air is supplied from the air blower to an immersed membrane through an air diffuser disposed below the immersed type separation membrane. A resulting flow of a liquid or a gasliquid mixed phase parallel to a membrane surface separates a suspension adhering to the membrane surface from the membrane surface. In addition, a normal operation sequence includes a filtration step and a stop step. In general, the air washing with the air blower is maintained in both steps to perform an operation while peeling off the suspension accumulated in the filtration step from the membrane surface in the stop step.

Here, a membrane to be used for a membrane element constituting the immersed type separation membrane is not particularly limited, and may be a flat membrane or a hollow fiber membrane. A structure of the membrane is not particularly limited, and for example, may be any of a flat membrane element structure, a flat membrane element structure in which a flat membrane is wound in a spiral shape, a flat membrane element structure having flexibility and including a flat membrane pair having two flat membranes arranged such that surfaces on a permeation side face each other and a water collection channel provided between the flat membranes, and a sealing portion that seals a space between the flat membranes at peripheral portions of the flat membranes, and a hollow fiber membrane element structure obtained by bundling a plurality of hollow fiber membranes.

Examples of the reverse osmosis membrane includes, as reverse osmosis membrane elements, a spiral-type element that is processed and disposed in a device and in which a membrane having a flat membrane shape is wound around a water collection pipe, a plate and frame-type element modularized by attaching flat membranes to both surfaces of a plate type support plate and laminating the plate type support plates via a spacer at a constant interval, a tubular type element using a tubular membrane, and a hollow fiber membrane element in which hollow fiber membranes are bundled and stored in a case. The element may be in any form, and the spiral-type element is preferable from the viewpoint of operability and compatibility. The number of elements can be freely set according to the membrane performance. As a material, for example, polyamides, polypiperazine amides, polyester amides, or crosslinked water-soluble vinyl polymers can be used, and as a membrane structure thereof, a membrane (asymmetric membrane) having a dense layer on at least one surface of the membrane and fine pores having gradually large pore diameters from the dense layer toward the inside or the other surface of the membrane or a membrane (composite membrane) having a very thin separation functional layer made of another material on the dense layer of such an asymmetric membrane can be used. However, the composite membrane is preferable for high water production, and among these membranes, a polyamide composite membrane is preferable and a piperazine polyamide composite membrane is more preferable from the viewpoint of an amount of permeated water, chemical resistance, and the like.

The ultrafiltration membrane 2 is operated while removing suspension (fouling) captured with the ultrafiltration membrane by periodically performing a physical washing step (backflow washing, air washing, draining wastewater, and supplying water) after a prescribed period of time elapses during the filtration step. In the backwash washing, water filtered by the ultrafiltration membrane 2 is generally used, is branched from a branch 6 of filtrated water wiring, and is used for backwashing, or although not illustrated, the filtrated water is pumped by a backwash pump from a filtrated water tank for temporarily storing the filtrated water to the ultrafiltration membrane. An air washing blower 7 is provided for the air washing. Although an air washing blower is illustrated in the figure, an air generating source may be a compressor. In the case of the compressor, an oil-free type is preferable since no oil in the air is supplied to the separation membrane.

In addition, it is preferred to repeat the filtration and the physical washing a plurality of times and then perform chemical liquid enhanced backwashing (CEB). The CEB is performed by supplying a chemical liquid to backwash water using a pump for injecting chemical liquid to backwash water (not illustrated) during backwashing.

As the chemical liquid, a water solution containing a chemical such as hydrochloric acid, sulfuric acid, nitric acid, citric acid, oxalic acid, ascorbic acid, sodium hydrogen sulfite, sodium hydroxide, and sodium hypochlorite can be used. In particular, an oxidizing agent such as sodium hypochlorite is effective for removing contaminants containing organic substances such as seawater, river water, and sewage treatment water. A concentration of sodium hypochlorite is preferably 10 mg/L to 10,000 mg/L. This is because if the concentration is less than 10 mg/L, a washing effect is insufficient, and if the concentration is more than 10,000 mg/L, a cost of the chemical becomes high, which is uneconomical. From the viewpoint, the concentration is more preferably 100 mg/L to 5,000 mg/L.

After the chemical liquid is added, the washing effect is improved when a contact time is provided for a certain period of time. A time for which the membrane is brought into contact with the chemical liquid is preferably about 5 minutes to 3 hours. This is because if the contact time is too short, a washing power is weak, and if the contact time is too long, a time for stopping the device is long, and an operation efficiency of the device decreases, which is economical disadvantageous.

Next, the water filtered through the ultrafiltration membrane 2 is pumped by a supply pump 8, pressurized by a high-pressure pump 9, and then supplied to the reverse osmosis membrane 3. A chemical such as a sterilizer or a scale inhibitor is injected between the supply pump 8 and the high-pressure pump 9 by a chemical injection device 10 in order to prevent fouling or scale of the reverse osmosis membrane 3.

In the reverse osmosis membrane 3, when a salt concentration of raw water is high through seawater desalination or the like, a supply pressure may be increased to about 8 MPa by the high-pressure pump 9 in order to obtain an effective osmotic pressure. In such a case, an energy recovery device 11 may be provided in order to effectively utilize the energy. The illustrated energy recovery device is a pressure exchange type, and includes an energy recovery device main body and a booster pump. The energy recovery device applies pressure of concentrated water to be discharged from the reverse osmosis membrane 3 to water to be supplied to the reverse osmosis membrane, which is branched at a branch 12 from the middle between the supply pump 8 and the high-pressure pump 9. The concentrated water of the reverse osmosis membrane 3 is discharged as concentrated water after pressure loss in a raw water side channel of the reverse osmosis membrane 3, and has a pressure lower than a supply pressure of the reverse osmosis membrane 3 due to piping pressure loss of concentrated water wiring or pressure loss of the energy recovery device, and even though the pressure is applied to the water to be supplied to the reverse osmosis membrane, which is branched from the middle between the supply pump 8 and the high-pressure pump 9, the pressure of the reverse osmosis membrane 3 is lower than a discharge pressure of the high-pressure pump 9, and thus the booster pump is installed to increase the pressure. The pressurized supply water is merged at a mixing 13 between the high-pressure pump 9 and the reverse osmosis membrane 3. Although the pressure exchange type is illustrated in the figure, the reverse pump type, the water turbine type, and the turbocharger may be used.

As described above, the water treatment process flow is constituted by a combination of the water flows (raw water, product water, and wastewater), the water treatment devices (ultrafiltration membrane and reverse osmosis membrane (although not illustrated, sedimentation separation, flotation separation, centrifugation, coagulation treatment, stirring treatment, aerobic treatment, anaerobic treatment, filtration, squeezing, filter cloth, nanofiltration membrane, accelerated oxidation, ion exchange, adsorption, absorption, deaeration, crystallization, distillation, heat exchange, and mineral addition may be used), the energy recovery devices (reverse pump type, water turbine type, pressure exchange type, and turbocharger), a chemical liquid injection device, equipment (pump, blower, compressor, tank), and piping connections (mixing and branching), and the water treatment process is calculated using these elements individually and in conjunction with each other.

Accordingly, it is necessary to consider the required specifications while changing the treatment flow using these elements, and the water treatment process flow can be created and changed by arranging the unit icons and connecting wirings having a direction along a flow of the water treatment process between the unit icons.

Here, the unit icon represents the water treatment unit process, and is at least one of the following A to F.
A. a water flow (raw water, product water, and wastewater);
B. a water treatment device (sedimentation separation, flotation separation, centrifugation separation, coagulation treatment, stirring treatment, aerobic treatment, anaerobic treatment, sand filtration, squeezing, filter cloth, microfiltration membrane, ultrafiltration membrane, nanofiltration membrane, reverse osmosis membrane, accelerated oxidation, ion exchange, adsorption, absorption, deaeration, crystallization, distillation, heat exchange, and mineral addition);
C. an energy recovery device (reverse pump type, water turbine type, pressure exchange type, and turbocharger);
D. a chemical liquid injection device;
E. equipment (pump, blower, compressor, and tank); and
F. piping connections (mixing and branch).

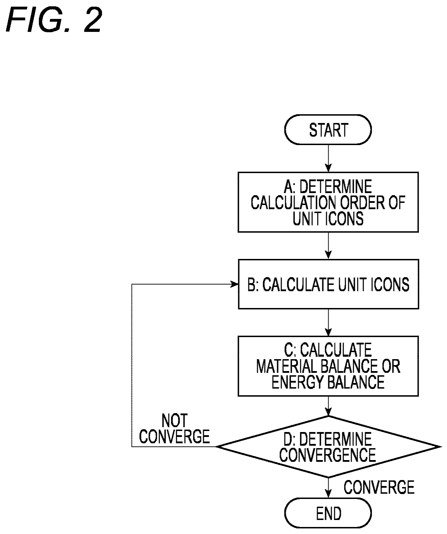

FIG. 2 is a flowchart illustrating an example of a process calculation method for a water treatment process flow created by arranging unit icons and performing wiring between the unit icons, the process calculation method including: A. a step of determining a calculation order of the unit icons based on a predetermined rule; B. a step of estimating at least one item among a flow rate, a water quality, a temperature, and a water pressure of treatment water for each of the unit icons according to the calculation order after step A; C. a step of adjusting, after the step B, at least one item among the flow rate, the water quality, the temperature, and the water pressure of the treatment water, which is estimated in step B so that there is no contradiction in a material balance or an energy balance in the water treatment process flow; and D. a step of determining, after step C, whether steps B and C are repeatedly executed.

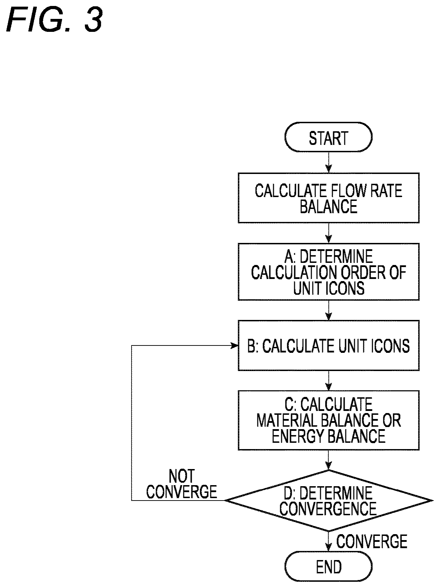

Further, in an actual water treatment process design, the flow rate may be predetermined as a required specification, and as illustrated in FIG. 3, a flow rate of each of the wirings may be determined so that there is no contradiction in a flow rate balance before or after step A.

Similarly, a water quality such as a salt may be predetermined as a required specification, and the water quality of each of the wirings may be determined before or after step A so that there is no contradiction in a water quality balance.

A rule of determining the calculation order in step A is not particularly limited, and for example, a rule of determining a calculation order in order in which the unit icons are arranged on a screen, a rule of determining a calculation order in order in which a user connects the wirings, and a rule of determining a calculation order toward the lower right from a unit icon arranged at the top left of the screen can be used. An example of the rule of determining the calculation order in step A will be described later.

Step B is a step of estimating at least one item among the flow rate, the water quality, the temperature, and the water pressure of the treatment water predetermined for each of the unit icons, and may include a step of determining predetermined calculation conditions or initial values by a user input or the like before the start of the water treatment process calculation as necessary. Here, the predetermined calculation conditions or the initial values mean, for example, the type or the number of reverse osmosis membrane elements in a reverse osmosis membrane unit icon.

Here, for a unit icon having at least two or more inflow wirings, such as a mixing unit icon, in a first process calculation of the unit icon, a flow rate, a water quality, a temperature, and a water pressure of at least one inflow wiring of the inflow wirings are determined by input or calculation, and any one or more of a flow rate, a water quality, a temperature, and a water pressure of at least another inflow wiring may not be determined. At this time, it is possible to perform the water treatment process calculation of the unit icon by ignoring the inflow wiring for which any one or more of the flow rate, the water quality, the temperature, and the water pressure are not determined, or by inputting any provisional value, but when a deviation between a calculation result at this time and a final calculation result obtained by a repetitive calculation is too large, there is a possibility that the water treatment process calculation does not converge, or there is a possibility that it take a long time to reach the convergence, and thus it is preferable to set a flow rate, a water quality, a temperature, and a water pressure closer to the final calculation result, and for example, it is possible to input, to the inflow wiring for which any one or more of the flow rate, the water quality, the temperature, and the water pressure are not determined, any one or more of the flow rate, the water quality, the temperature, and the water pressure of the other inflow wiring for which the flow rate, the water quality, the temperature, and the water pressure are determined.

Further, when the flow rate of each of the wirings is determined before step B as described above, the water quality, the temperature, and the water pressure of at least one of the inflow wirings may be determined by input or calculation, and any one or more of the water quality, the temperature, and the water pressure of at least another inflow wirings may not be determined, and at this time, it is possible to input, to the inflow wiring for which any one or more of the water quality, the temperature, and the water pressure are not determined, any one or more of the water quality, the temperature, and the water pressure of the other inflow wiring for which the water quality, the temperature, and the water pressure are determined.

In step C, when there is a change in at least one item among the flow rate, the water quality, the temperature, and the water pressure of the wiring connected to any one of the unit icons, and the flow rate, the water quality, the temperature, or the water pressure is not balanced in the unit icon connected to the other side of the wiring, the material balance or the energy balance may be adjusted.

Here, the case in which there is a change in at least one item among the flow rate, the water quality, the temperature, and the water pressure of the wiring connected to the unit icon is step B or step C itself, and by continuously adjusting the material balance or the energy balance until the flow rate, the water quality, the temperature, and the water pressure are balanced for all the unit icons arranged and connected, it is possible to ensure that there is no contradiction in the material balance or the energy balance of the entire water treatment process flow.

Here, the contradiction in the material balance or the energy balance of the water treatment process flow or the unit icon refers to a state in which an error between a flow rate, or a material such as salts, or energy supplied to the entire system or each of the icons and a flow rate, or a material such as salts, or energy discharged from the entire system or each of the icons exceeds a predetermined specified value, and when the error falls below the predetermined specified value, it can be determined that there is no contradiction.

In addition, as described above, in the actual water treatment process design, the flow rate may be determined in advance as a required specification, and thus particularly, when the flow rate of the treatment water is changed in step B, it is preferable to adjust the flow rate of the raw water or the treatment water, or the flow rates of both the raw water and the treatment water so that there is no contradiction in the material balance for each of the unit icons in step C.

If the process proceeds to a next step without resolving the contradiction in the material balance or the energy balance of the water treatment process flow or the unit icon, an inappropriate initial value may be set in each of the unit icons, resulting in an inappropriate solution, and the number of times of calculation required to obtain an appropriate solution may increase, or the calculation may be stopped without obtaining a solution. Therefore, step C can contribute to improving a calculation accuracy or a calculation speed.

In step D, it is sufficient to determine that the water treatment process calculation is ended if the water treatment process calculation reaches a steady state, and that steps B and C are to be performed again if the water treatment process calculation does not reach the steady state, which is generally applicable to any water treatment process, and thus it is preferable to determine that the repeated execution is necessary until at least one or both of a case in which an error in the material balance of the water treatment process flow is equal to or less than the predetermined specified value and a case in which a difference between a previous estimation result and an estimation result of step B in at least one of the product water unit icon and the wastewater unit icon is equal to or less than the predetermined specified value are satisfied.

Hereinafter, the example of the rule of determining the calculation order in step A will be described.

As described above, the rule of determining the calculation order in step A is not particularly limited, but it is necessary to receive information on water to be supplied to each of the unit icons except for the raw water from a unit icon located on upstream of the unit icon, and thus it is preferable to provide a rule of determining a calculation order along a direction of the wiring in order to prevent an inappropriate initial value from being set in step B to obtain an inappropriate solution, to prevent the number of times of calculation from increasing until an appropriate solution is obtained, or to prevent the calculation from being stopped without obtaining a solution.

In addition, when there is a unit icon that is not calculated in step B, there is a possibility that any one of the flow rate, the water quality, the temperature, and the water pressure is not balanced in any of the unit icons or in the entire water treatment process flow, or a possibility that a solution required by the user cannot be obtained, and thus it is preferable to provide a rule of determining the calculation order without omission for all the unit icons that form the water treatment process flow.

Depending on the type of the unit icons and a definition method thereof, there may be a unit icon that does not need to estimate any one of the flow rate, the water quality, the temperature, and the water pressure in step B. For example, when the product water unit icon only receives the estimated flow rate, water quality, temperature, and water pressure in the unit icon located upstream of the product water unit icon, the product water unit icon does not need to estimate any one of the flow rate, the water quality, the temperature, and the water pressure in step B. At this time, there is no problem in the water treatment process calculation even if no calculation order is set for the product water unit, which is synonymous with a case in which a processing of the product water unit icon in step B is not changed in any one of the flow rate, the water quality, the temperature, and the water pressure while a calculation order is set for the product water unit icon, and in the present embodiment, no distinction is made in these cases.

In addition, in contrast to the above description, the calculation order may be opposite to the direction of the wiring, or in step B, a unit icon to be calculated next after a certain unit icon may not be fixed, causing the calculation to stop, and thus it is preferable to provide a rule of preventing a calculation order of a unit icon from overlapping a calculation order of another unit icon. As the rule of preventing the overlapping of the calculation orders, for example, a rule of setting a calculation order in order from 1 so that no overlapping occurs, and a rule of setting, for one of the unit icons in which the overlapping of the calculation orders occurs, a calculation order that does not overlap a calculation order set for another unit icon can be used.

Furthermore, for the same reason as the rule of preventing the overlapping of the calculation orders, it is preferable to provide a rule of preventing, when the calculation order is set for a certain unit icon, the calculation order from being overwritten, except for a case of preventing overlapping when the calculation orders overlap. As the rule of preventing the calculation order from being overwritten, for example, a rule of prohibiting a change in the calculation order set for any of the unit icons once, and a rule of restoring the original calculation order when the calculation order is overwritten can be used.

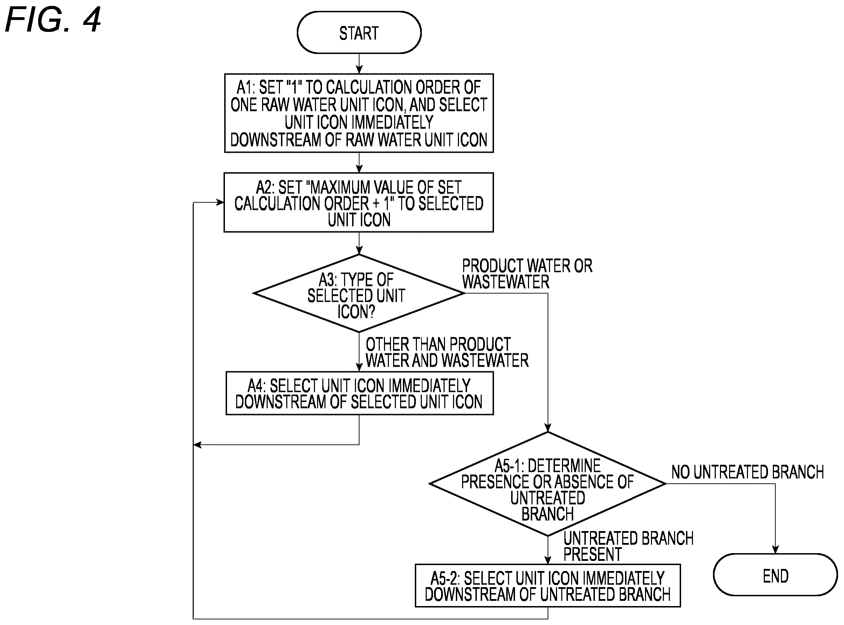

FIG. 4 is a flowchart illustrating an example of a method of determining a calculation order of unit icons in step A, which includes a rule of determining a calculation order along a direction of the wiring, a rule of determining a calculation order without omission for all the unit icons forming the water treatment process flow, a rule of preventing a calculation order of a certain unit icon from overlapping a calculation order of another unit icon, and a rule of preventing, when the calculation order is set for a unit icon, the calculation order from being overwritten, and step A includes the following steps A1 to A5.

Step A includes A1. a step of selecting one of the raw water unit icons, setting "1" to the calculation order of the selected raw water unit icon, then canceling the selection of the raw water unit icon, selecting a unit icon immediately downstream of the raw water unit icon by passing through outflow wirings coming out of the raw water unit icon, and proceeding to the following step A2; A2. a step of setting a value obtained by adding 1 to a maximum value of all the calculation order set for the unit icons forming the water treatment process flow in the calculation order of the unit icon selected in any one of step A1 and steps A4 and A5 to be described later, and proceeding to the following step A3; A3. a step of proceeding to the following step A4 when the unit icon selected in any one of step A1 and steps A4 and A5 to be described later is not the product water unit icon or the wastewater unit icon, and canceling the selection of the unit icon when the unit icon selected in any one of step A1 and steps A4 and A5 to be described later is the product water unit icon or the wastewater unit icon, and proceeding to the following step A5; A4. a step of canceling the selection of the unit icon selected in any one of steps A1, A4, and A5, selecting a unit icon immediately downstream of the unit icon by passing through one of the outflow wirings coming out of the unit icon, and proceeding to step A2; and A5. a step of selecting, when there is an unpassed outflow wiring that flows out from the unit icon whose calculation order is determined in the water treatment process flow, a unit icon into which the unpassed outflow wiring flows, proceeding to step A2, and ending step A when there is no unpassed outflow wiring that flows out from the unit icon whose calculation order is determined.

Here, step A3 skips step A4 when there is no wiring downstream of the unit icon selected in any one of steps A1, A4, and A5, so that step A4 is prevented from being unable to be performed. Examples of the unit icon having no wiring downstream include the product water unit icon and the wastewater unit icon.

In addition, in step A4, when there are two or more outflow wirings downstream from a unit icon, such as the reverse osmosis membrane unit icon and the branch unit icon, if a predetermined rule such that which of the outflow wirings is selected, for example, a rule of preferentially selecting the permeated water if the outflow wirings are from the reverse osmosis membrane unit icon is defined, the calculation order can be determined efficiently and without omission for all the unit icons forming the water treatment process flow, which is preferable.

In addition, in step A5, when there are a plurality of unpassed outflow wirings that flow out from the unit icon whose calculation order is determined, any one of the unit icons to which the outflow wirings are connected as inflow wirings may be selected, but it is more preferable to define a predetermined rule, for example a rule of preferentially selecting a unit icon into which a wiring flowing out from a unit icon installed further upstream flows, which allows the process to proceed to a next step quickly.

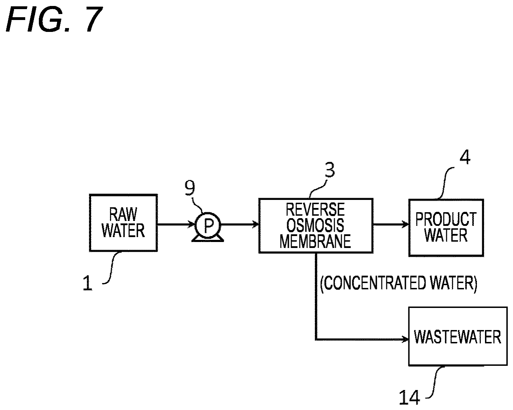

FIG. 7 is a flowchart illustrating an example of the water treatment process of the present embodiment, and an example of a method for determining a unit icon calculation order in steps A1 to A5 will be described with reference to FIG. 7. Here, in step A4, the rule of preferentially selecting the permeated water from the permeated water and the concentrated water of the reverse osmosis membrane unit icon is set.

At this time, first, in step A1: "A1. a step of selecting one of the raw water unit icons, setting "1" to the calculation order of the selected raw water unit icon, then canceling the selection of the raw water unit icon, selecting a unit icon immediately downstream of the raw water unit icon by passing through outflow wirings coming out of the raw water unit icon, and proceeding to the following step A2", a raw water unit icon 1 is selected, a calculation order is determined to be "1", the selection is moved from the raw water unit icon 1 to a high-pressure pump unit icon 9, and the process proceeds to step A2.

Next, in step A2: "A2. a step of setting a value obtained by adding 1 to a maximum value of all the calculation order set for the unit icons forming the water treatment process flow in the calculation order of the unit icon selected in any one of step A1 and steps A4 and A5 to be described later, and proceeding to the following step A3", a calculation order of the high-pressure pump unit icon 9 is determined to be "2" by adding 1 to a maximum calculation order up to this point, and the process proceeds to step A3.

Next, in step A3: "A3. a step of proceeding to the following step A4 when the unit icon selected in any one of step A1 and steps A4 and A5 to be described later is not the product water unit icon or the wastewater unit icon, canceling the selection of the unit icon when the unit icon selected in any one of step A1 and steps A4 and A5 to be described later is the product water unit icon or the wastewater unit icon, and proceeding to the following step A5", the high-pressure pump unit icon 9 is neither product water nor wastewater, and the process proceeds to step A4.

Next, in step A4: "A4. a step of canceling the selection of the unit icon selected in any one of steps A1, A4, and A5, selecting a unit icon immediately downstream of the unit icon by passing through one of the outflow wirings coming out of the unit icon, and proceeding to step A2", the selection is moved from the high-pressure pump unit icon 9 to the reverse osmosis membrane unit icon 3, and the process returns to step A2.

Similarly, by repeating steps A2, A3, and A4, a calculation order of the reverse osmosis membrane unit icon 3 is continuously determined to be "3", and a calculation order of the product water unit icon 4 is continuously determined to be "4".

In step A3 immediately after the calculation order of the product water unit icon 4 is determined, the unit icon being selected is the product water, and thus the selection of the product water unit icon 4 is canceled, and then the process proceeds to step A5.

Next, in step A5: "A5. a step of selecting, when there is an unpassed outflow wiring that flows out from the unit icon whose calculation order is determined in the water treatment process flow, a unit icon into which the unpassed outflow wiring flows, proceeding to step A2, and ending step A when there is no unpassed outflow wiring that flows out from the unit icon whose calculation order is determined", the reverse osmosis membrane unit icon 3 corresponds to "when there is an unpassed outflow wiring that flows out from the unit icon whose calculation order is determined" in step A5, and thus the unit icon into which the unpassed outflow wiring flows, that is, the wastewater unit icon 14, is selected, and the process returns to step A2.

After a calculation order of the wastewater unit icon 14 is determined to be "5" in step A2, the process proceeds to step A5 through step A3 as in the case in which the product water unit icon 4 is selected.

At this time, this corresponds to "when there is no unpassed outflow wiring that flows out from the unit icon whose calculation order is determined" in step A5, and thus step A ends here, and the unit icon calculation order of the unit icons constituting FIG. 7 is the raw water unit icon 1: "1", the high-pressure pump unit icon 9: "2", the reverse osmosis membrane unit icon 3: "3", the product water unit icon 4: "4", and the wastewater unit icon 14: "5".

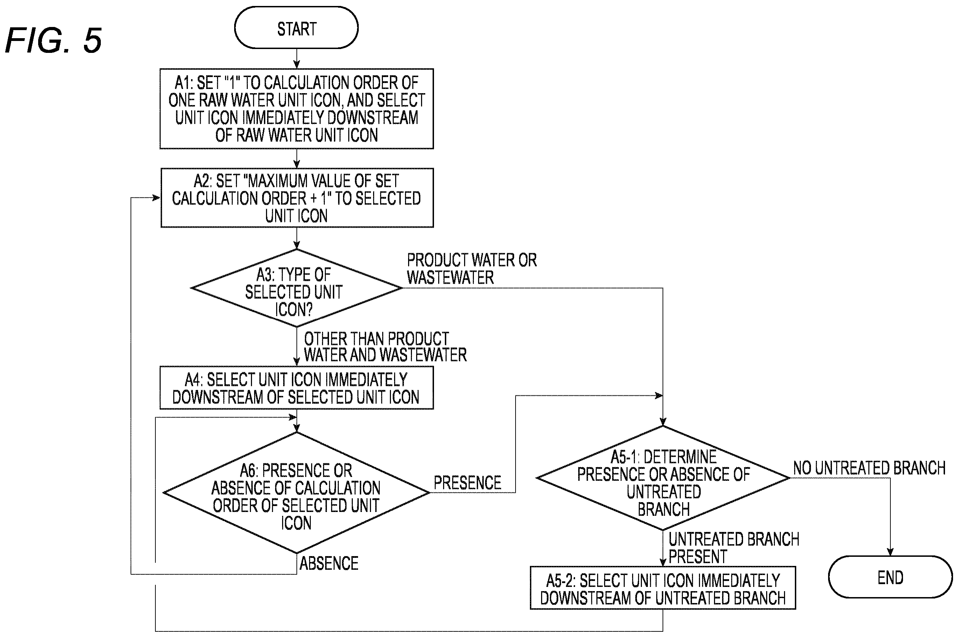

FIG. 5 is a flowchart illustrating another example of the method of determining a calculation order of unit icons in step A, which includes the rule of determining the calculation order along the direction of the wiring, the rule of determining the calculation order without omission for all the unit icons forming the water treatment process flow, the rule of preventing the calculation order of a unit icon from overlapping the calculation order of another unit icon, and the rule of preventing, when the calculation order is set for a unit icon, the calculation order from being overwritten, as in FIG. 4. This determination method includes step A6 of, between step A4 and step A2 in FIG. 4, proceeding to step A5 when the calculation order of the unit icon selected in any one of steps A1, A4, and A5 is determined, and proceeding to step A2 when the calculation order of the unit icon selected in any one of steps A1, A4, and A5 is not determined, so as not to be contrary to the above rule even in a water treatment process flow including more complicated circulating wiring, and in step A5, when there is an unpassed outflow wiring that flows out from the unit icon whose calculation order is determined, the unit icon into which the unpassed outflow wiring flows is selected, and the process proceeds to step A6.

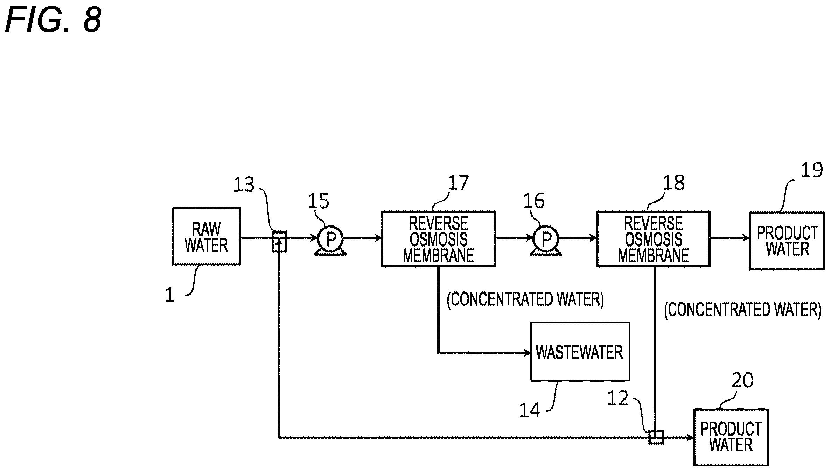

FIG. 8 is a flowchart illustrating another example of the water treatment process of the present embodiment, and an example of a method for determining a unit icon calculation order in steps A1 to A6 will be described with reference to FIG. 8.

As in the case of FIG. 7, the rule of preferentially selecting the permeated water from the permeated water and the concentrated water of the reverse osmosis membrane unit icon in step A4, a rule of preferentially selecting a right outflow wiring from the right outflow wiring and a left outflow wiring of the branch unit icon 12 in step A4, and the rule of preferentially selecting the unit icon into which the wiring flowing out from the unit icon installed further upstream flows in step A5 are set.

At this time, as in the case of FIG. 7, the calculation order of the raw water unit icon 1 and a calculation order of a mixing unit icon 13 following the raw water unit icon 1 are determined to be "1" and "2", respectively, in steps A1 and A2.

Further, in a state in which a first high-pressure pump unit icon 15 is selected through steps A3 and A4, the process proceeds to step A6: "a step of proceeding to step A5 when the calculation order of the unit icon selected in any one of steps A1, A4, and A5 is determined, and proceeding to step A2 when the calculation order of the unit icon selected in any one of steps A1, A4, and A5 is not determined". At this time, the first high-pressure pump unit icon 15 corresponds to "when the calculation order of the unit icon selected in any one of steps A1, A4, and A5 is not determined" in step A6, and thus the process proceeds to step A2.

Similarly, by repeating steps A2, A3, A4, and A6, calculation orders of the first high-pressure pump unit icon 15, a first reverse osmosis membrane unit icon 17, a second high-pressure pump unit icon 16, a second reverse osmosis membrane unit icon 18, and a first product water unit icon 19 are determined to be "3," "4," "5," "6," and "7," respectively.

In step A3 immediately after the calculation order of the first product water unit icon 19 is determined, the first product water unit icon 19 is a product water unit icon, and thus the selection of the first product water unit icon 19 is canceled, and the process proceeds to step A5.

Here, "when there is an unpassed outflow wiring that flows out from the unit icon whose calculation order is determined" in step A5 corresponds to two unit icons, that is, the first reverse osmosis membrane unit icon 17 and the second reverse osmosis membrane unit icon 18. As described above, the rule of preferentially selecting the unit icon into which the wiring flowing out from the unit icon installed further upstream flows is set, and thus the wastewater unit icon 14 into which concentrated water of the first reverse osmosis membrane unit icon 17 flows is selected at this time, and the process proceeds to step A6.

At this time, the calculation order of the wastewater unit icon 14 is not determined, and thus the process proceeds to step A2, the calculation order of the wastewater unit icon 14 is determined to be "8" in step A2, the selection of the wastewater unit icon 14 is canceled in the subsequent step A3, and the process proceeds to step A5.

At this time, the unit icon corresponding to "when there is an unpassed outflow wiring that flows out from the unit icon whose calculation order is determined" in step A5 is only the second reverse osmosis membrane unit icon 18, and thus the branch unit icon 12 into which concentrated water of the second reverse osmosis membrane unit icon 18 flows is selected, and the process proceeds to step A6.

Here, the "rule of preferentially selecting the right outflow wiring from the right outflow wiring and the left outflow wiring of the branch unit icon 12" is set in advance, and thus the calculation orders of the branch unit icon 12 and the second product water unit icon 20 are determined to be "9" and "10," respectively, by going through steps A6, A2, A3, A4, A6, and A2 in order.

Next, in step A3, the second product water unit icon 20 is product water, and thus the selection of the second product water unit icon 20 is canceled, and the process proceeds to step A5. At this time, the branch unit icon corresponds to "when there is an unpassed outflow wiring that flows out from the unit icon whose calculation order is determined" in step A5, the mixing unit icon 13 into which the left outflow wiring of the branch unit icon flows is selected, and the process proceeds to step A6.

Here, the calculation order of the mixing unit icon 13 is already determined to be "2" and corresponds to "when the calculation order of the unit icon selected in any one of steps A1, A4, and A5 is determined" in step A6, and thus the process proceeds to step A5.

At this time, this corresponds to "when there is no unpassed outflow wiring that flows out from the unit icon whose calculation order is determined" in step A5, and thus step A ends here, and an example of the unit icon calculation order of the unit icons constituting FIG. 8 is the raw water unit icon 1: "1", the mixing unit icon 13: "2", the first high-pressure pump unit icon 15: "3", the first reverse osmosis membrane unit icon 17: "4", the second high-pressure pump unit icon 16: "5", the second reverse osmosis membrane unit icon 18: "6", the first product water unit icon 19: "7", the wastewater unit icon 14: "8", the branch unit icon 12: "9", and the second product water unit icon 20: "10".

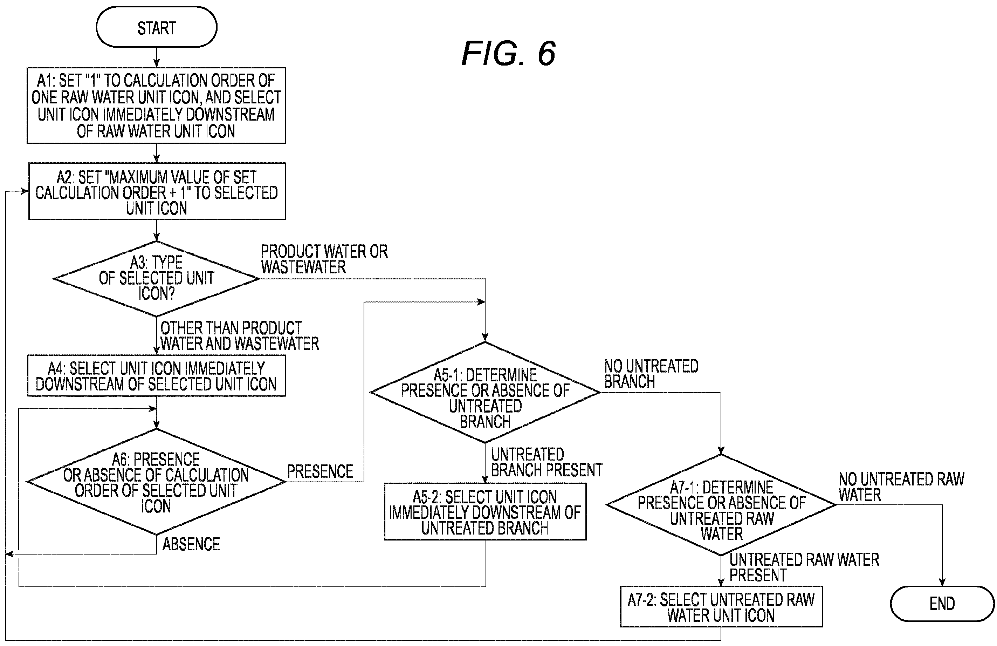

FIG. 6 is a flowchart illustrating another example of the method of determining a calculation order of unit icons in step A, which includes the rule of determining the calculation order along the direction of the wiring, the rule of determining the calculation order without omission for all the unit icons forming the water treatment process flow, the rule of preventing the calculation order of a unit icon from overlapping the calculation order of another unit icon, and the rule of preventing, when the calculation order is set for a unit icon, the calculation order from being overwritten, as in FIG. 4 and FIG. 5. This calculation method includes step A7 of selecting, when there is the raw water unit icon whose calculation order is not determined, the raw water unit icon, proceeding to step A2, and ending step A when there is no raw water unit icon whose calculation order is not determined, during the transition from step A5 to a step of ending step A in FIG. 5, so as not to be contrary to the above rule even in a case in which the water treatment process flow includes two or more raw water unit icons, and each of steps A2, A3, A4, and A6 is directed to the unit icon selected in any of steps A1, A4, A5, and A7.

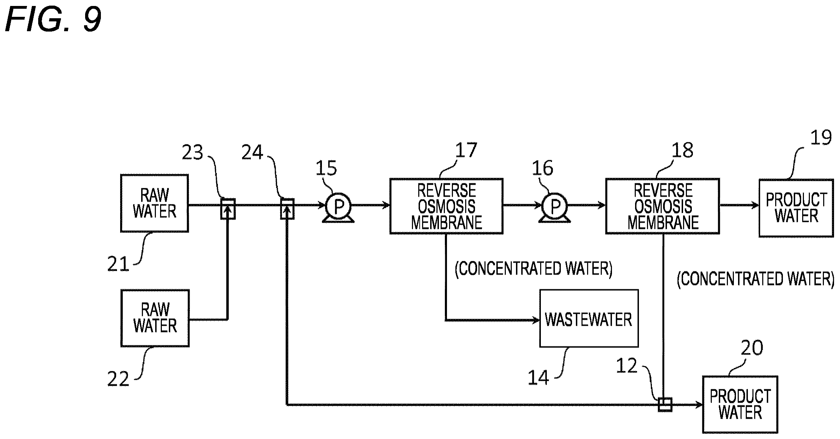

FIG. 9 is a flowchart illustrating another example of the water treatment process of the present embodiment, and an example of a method for determining a unit icon calculation order in steps A1 to A7 will be described with reference to FIG. 9.

As in the case of FIG. 8, the rule of preferentially selecting the permeated water from the permeated water and the concentrated water of the reverse osmosis membrane unit icon in step A4, the rule of preferentially selecting the right outflow wiring from the right outflow wiring and the left outflow wiring of the branch unit icon 12 in step A4, and the rule of preferentially selecting the unit icon into which the wiring flowing out from the unit icon installed further upstream flows in step A5 are set.

At this time, as in the case of FIG. 8, according to steps A1, A2, A3, A4, A5, and A6, the calculation order is determined such that a first raw water unit icon 21 is "1", a first mixing unit icon 23 is "2", a second mixing unit icon 24 is "3", the first high-pressure pump unit icon 15 is "4", the first reverse osmosis membrane unit icon 17 is "5", the second high-pressure pump unit icon 16 is "6", the second reverse osmosis membrane unit icon 18 is "7", the first product water unit icon 19 is "8", the wastewater unit icon 14 is "9", the branch unit icon 12 is "10", and the second product water unit icon 20 is "11".

In step A5 after the calculation order of the second product water unit icon 20 is determined, this corresponds to "when there is no unpassed outflow wiring that flows out from the unit icon whose calculation order is determined" in step A5, and thus the process proceeds to step A7 of "selecting, when there is the raw water unit icon whose calculation order is not determined, the raw water unit icon, proceeding to step A2, and ending step A when there is no raw water unit icon whose calculation order is not determined", and the second raw water unit icon 22 corresponds to "when there is the raw water unit icon whose calculation order is not determined" in step A7, and thus the second raw water unit icon 22 is selected, and the process proceeds to step A2.

After the calculation order of the second raw water unit icon 22 is determined to be "12" in step A2, the process proceeds to steps A3, A5, and A7 in this order, and at this time, this corresponds to "when there is no raw water unit icon whose calculation order is not determined" in step A7, and thus step A ends, and an example of the unit icon calculation order of the unit icons constituting FIG. 9 is the first raw water unit icon: "1", the first mixing unit icon: "2", the second mixing unit icon: "3", the first high-pressure pump unit icon: "4", the first reverse osmosis membrane unit icon: "5", the second high-pressure pump unit icon: "6", the second reverse osmosis membrane unit icon: "7", the first product water unit icon: "8", the wastewater unit icon: "9", the branch unit icon: "10", the second product water unit icon: "11", and the second raw water unit icon: "12".

As described above, step A including any one or more of steps A1 to A7 can quickly determine the calculation order from the raw water toward downstream without omission for all the unit icons forming the water treatment process flow, and can contribute to improving the calculation accuracy and calculation speed of the entire water treatment process calculation.

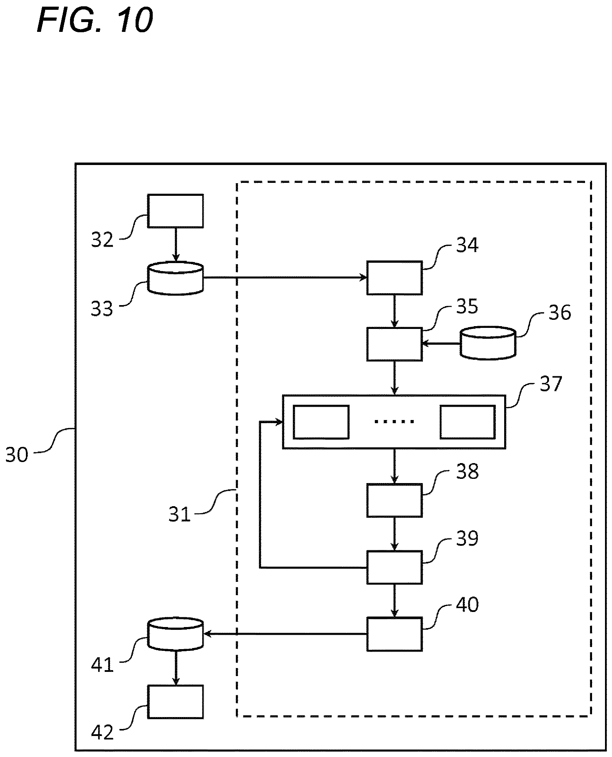

In the embodiment of the present invention, as illustrated in the schematic diagram of the system configuration as an example of the embodiment of the present invention in FIG. 10, the water treatment process calculation method may be stored as a program that can be read by the computer 30 in a computer-readable recording medium on which the program is recorded. In this case, the water treatment process calculation program is stored in a recording medium such as a hard disk of the computer.

As an example, the computer 30 includes a water treatment process calculation program 31, a water treatment process input unit 32, a water treatment process memory unit 33, a water treatment process calculation result memory unit 41, and a water treatment process calculation result output unit 42. In addition, the water treatment process calculation program 31 includes a water treatment process read unit 34, a unit icon calculation order determination unit 35, a unit icon calculation order determination rule memory unit 36, a unit icon calculation unit 37, a material or energy balance calculation unit 38, a convergence determination unit 39, and a water treatment process calculation result storage unit 40.

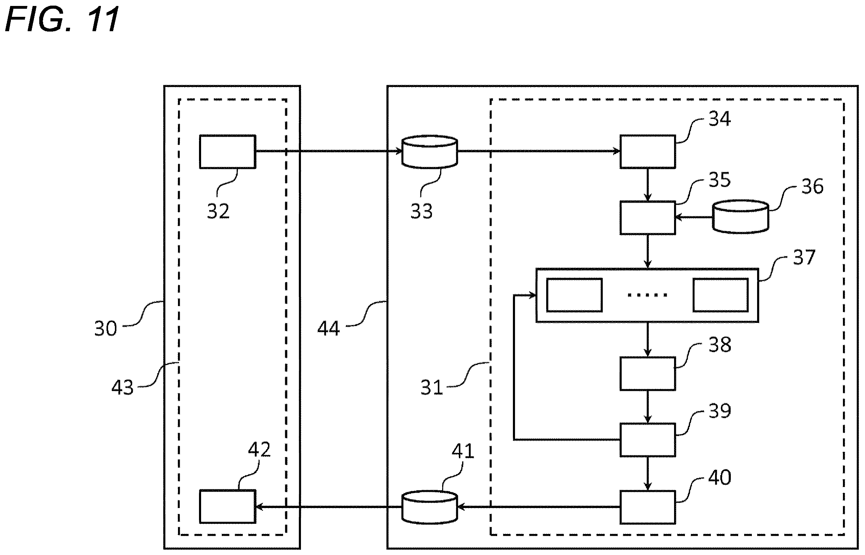

In addition, as illustrated in the schematic diagram of the system configuration as another example of the embodiment of the present invention in FIG. 11, the system for storing the recording medium may be a server 44 such as an on-premise server or a cloud server.

In the example of FIG. 11, the entire system includes the computer 30 and the server 44. The computer 30 includes the water treatment process input unit 32, a water treatment process calculation result output unit 42, and a browser 43 that can access the water treatment process input unit 32 and the water treatment process calculation result output unit 42. The server 44 includes the water treatment process calculation program 31, the water treatment process memory unit 33, and the water treatment process calculation result memory unit 41. The configuration of the water treatment process calculation program 31 is the same as that of FIG. 10.

As described above, when the water treatment process calculation program is stored in the server 44, it is more preferred that the system accesses the program via the browser 43 on the computer 30 and executes the water treatment process calculation program to perform a calculation.

The present application is based on a Japanese patent application (Japanese Patent Application No. 2023-11786) filed on January 30, 2023, and the contents thereof are incorporated herein by reference.

### REFERENCE SIGNS LIST

1: raw water
2: ultrafiltration membrane
3: reverse osmosis membrane
4: product water
5: raw water pump
6: filtrated water branch
7: air washing blower
8: supply pump
9: high-pressure pump
10: chemical injection device
11: energy recovery device
12: branch
13: mixing
14: wastewater
15: first high-pressure pump
16: second high-pressure pump
17: first reverse osmosis membrane
18: second reverse osmosis membrane
19: first product water
20: second product water
21: first raw water
22: second raw water
23: first mixing
24: second mixing
30: computer
31: water treatment process calculation program
32: water treatment process input unit
33: water treatment process memory unit
34: water treatment process read unit
35: unit icon calculation order determination unit
36: unit icon calculation order determination rule memory unit
37: unit icon calculation unit
38: material or energy balance calculation unit
39: convergence determination unit
40: water treatment process calculation result storage unit
41: water treatment process calculation result memory unit
42: water treatment process calculation result output unit
43: browser
44: server

## Claims

1. A process calculation method for a water treatment process including a plurality of water treatment unit processes, the method comprising the following steps A to D for a water treatment process flow formed by arranging unit icons of the water treatment unit processes and performing wiring between the unit icons:
A. a step of determining a calculation order of the unit icons based on a predetermined rule;
B. a step of estimating at least one item among a flow rate, a water quality, a temperature, and a water pressure of treatment water for each of the unit icons according to the calculation order after the step A;
C. a step of adjusting, after the step B, at least one item among a flow rate, a water quality, a temperature, and a water pressure of raw water or treatment water, which is estimated in the step B so that there is no contradiction in a material balance or an energy balance in the water treatment process flow; and
D. a step of determining, after the step C, whether the steps B and C are repeatedly executed.

2. The process calculation method for a water treatment process according to claim 1, further comprising, before or after the step A of determining the calculation order of the unit icons, at least one of:
a step of calculating a flow rate balance for the water treatment process flow; and
a step of calculating a water quality balance for the water treatment process flow.

3. The process calculation method for a water treatment process according to claim 1 or 2, wherein
when the flow rate of the treatment water is estimated in the step B,
the flow rate of the raw water or the treatment water is adjusted such that an error in the material balance for each of the unit icons in the step C is equal to or less than a predetermined specified value.

4. The process calculation method for a water treatment process according to any one of claims 1 to 3, wherein
in the step B of estimating at least one item among the flow rate, the water quality, the temperature, and the water pressure of the treatment water for each of the unit icons according to the calculation order,
when the water treatment process flow includes a mixing unit icon having at least two or more inflow wirings, and
when a flow rate, a water quality, a temperature, and a water pressure of at least one of the inflow wirings of the unit icon are determined by input or calculation, and any one or more of a flow rate, a water quality, a temperature, and a water pressure of at least another inflow wiring is not determined,
at least one item among the flow rate, the water quality, the temperature, and the water pressure of the treatment water is estimated by inputting any one or more of the flow rate, the water quality, the temperature, and the water pressure of the inflow wiring for which the flow rate, the water quality, the temperature, and the water pressure are determined to the inflow wiring for which any one or more of the flow rate, the water quality, the temperature, and the water pressure are not determined.

5. The process calculation method for a water treatment process according to any one of claims 1 to 4, wherein
in the step A of determining the calculation order of the unit icons,
the wiring is wired along a direction of the water treatment process, and the calculation order is determined along the direction, and
the calculation order is determined without omission for all the unit icons forming the water treatment process flow.

6. The process calculation method for a water treatment process according to any one of claims 1 to 5, wherein
in the step A of determining the calculation order of the unit icons,
a calculation order of a unit icon is prevented from overlapping a calculation order of another unit icon.

7. The process calculation method for a water treatment process according to any one of claims 1 to 6, wherein
in the step A of determining the calculation order of the unit icons,
when a calculation order is set for a unit icon, the calculation order is prevented from being overwritten.

8. The process calculation method for a water treatment process according to any one of claims 1 to 7, wherein
the unit icon is at least one of the following 1 to 7:
1. water flow (raw water, product water, and wastewater);
2. water treatment device (sedimentation separation, flotation separation, centrifugation separation, coagulation treatment, stirring treatment, aerobic treatment, anaerobic treatment, filtration, squeezing, filter cloth, microfiltration membrane, ultrafiltration membrane, nanofiltration membrane, reverse osmosis membrane, accelerated oxidation, ion exchange, adsorption, absorption, deaeration, crystallization, distillation, heat exchange, and mineral addition);
3. energy recovery device (reverse pump type, water turbine type, pressure exchange type, and turbocharger);
4. chemical liquid injection device;
5. deaeration device;
6. equipment (pump, blower, and compressor); and
7. piping connections (mixing and branch).

9. The process calculation method for a water treatment process according to any one of claims 1 to 8, wherein
when the water treatment process includes at least one raw water unit icon, and at least one product water unit icon or at least one wastewater unit icon,
in the step A of determining the calculation order of the unit icons,
the step A includes the following steps A1 to A5:
A1. a step of selecting one raw water unit icon, setting "1" to the calculation order of the selected raw water unit icon, then canceling the selection of the raw water unit icon, selecting a unit icon immediately downstream of the raw water unit icon by passing through an outflow wiring coming out of the raw water unit icon, and proceeding to the following step A2;
A2. a step of setting a value obtained by adding 1 to a maximum value of all the calculation order set for the unit icons forming the water treatment process flow in the calculation order of the unit icon selected in any one of the step A1 and steps A4 and A5 to be described later, and proceeding to the following step A3;
A3. a step of proceeding to the following step A4 when the unit icon selected in any one of the step A1 and steps A4 and A5 to be described later is not the product water unit icon or the wastewater unit icon, and canceling the selection of the unit icon when the unit icon selected in any one of the step A1 and steps A4 and A5 to be described later is the product water unit icon or the wastewater unit icon and proceeding to the following step A5;
A4. a step of canceling the selection of the unit icon selected in any one of the steps A1 and A4, and step A5 to be described later, selecting a unit icon immediately downstream of the unit icon by passing through one outflow wiring coming out of the unit icon, and proceeding to the step A2; and
A5. a step of selecting, when there is an unpassed outflow wiring that flows out from a unit icon whose calculation order is determined in the water treatment process flow, a unit icon into which the unpassed outflow wiring flows and proceeding to the step A2, and ending the step A when there is no unpassed outflow wiring that flows out from a unit icon whose calculation order is determined.

10. The process calculation method for a water treatment process according to any one of claims 1 to 9, wherein
when the water treatment process flow includes a circulating wiring,
the step A includes the following step A6 to which the process proceeds after the step A4, and
in the step A5, when there is the unpassed outflow wiring that flows out from the unit icon whose calculation order is determined, the unit icon into which the unpassed outflow wiring flows is selected, and the process proceeds to the step A6:
A6. a step of proceeding to the step A5 when the calculation order of the unit icon selected in any one of the steps A1, A4, and A5 is determined, and
proceeding to the step A2 when the calculation order of the unit icon selected in any one of the steps A1, A4, and A5 is not determined.

11. The process calculation method for a water treatment process according to any one of claims 1 to 10, wherein
when the water treatment process flow includes two or more raw water unit icons,
the step A includes the following step A7 to which the process proceeds when there is no unit icon whose calculation order is not determined immediately downstream of the unit icon whose calculation order is determined in the step A5, and
each of the steps A2, A3, A4, and A6 is directed to a unit icon selected in any one of the steps A1, A4, A5, and A7:
A7. a step of selecting, when there is the raw water unit icon whose calculation order is not determined in the water treatment process flow, the raw water unit icon, proceeding to the step A2, and
ending the step A when there is no raw water unit icon whose calculation order is not determined.

12. The process calculation method for a water treatment process according to any one of claims 1 to 11, wherein
in the step D of determining whether the steps B and C are repeatedly executed,
it is determined that the repeated execution is necessary until at least one or both of a case in which an error in the material balance of the water treatment process flow is equal to or less than a predetermined specified value and a case in which a difference between a previous estimation result and an estimation result of the step B in at least one of the product water unit icon and the wastewater unit icon is equal to or less than a predetermined specified value are satisfied.

13. A water treatment calculation program for causing a computer, in order to perform a process calculation of a water treatment process including a plurality of water treatment unit processes, to function as:
for a water treatment process flow formed by a water treatment process flow input unit that arranges unit icons of the water treatment unit processes and performs wiring between the unit icons, and stored in a water treatment process flow memory unit,
a unit configured to read the water treatment process flow from the water treatment process flow memory unit for use in the following units A to D:
A: a unit configured to determine a calculation order of the unit icons based on a rule stored in advance in a unit icon calculation order determination rule memory unit;
B: a unit configured to estimate at least one item among a flow rate, a water quality, a temperature, and a water pressure of treatment water for each of the unit icons according to the calculation order;
C: a unit configured to adjust at least one item among a flow rate, a water quality, a temperature, and a water pressure of raw water or treatment water, which is estimated by the unit B so that there is no contradiction in a material balance or an energy balance in the water treatment process flow; and
D: a unit configured to determine whether the units B and C are repeatedly executed, and
a unit configured to store a water treatment process calculation result in a water treatment process calculation result memory unit for use in a water treatment process calculation result output unit.

14. The water treatment calculation program according to claim 13, for further causing the computer to function as: at least one of the following units:
before or after the unit A configured to determine the calculation order of the unit icons,
a unit configured to calculate a flow rate balance for the water treatment process flow; and
a unit configured to calculate a water quality balance for the water treatment process flow.

15. The water treatment calculation program according to claim 13 or 14, wherein
when the flow rate of the treatment water is estimated by the unit B,
the unit C adjusts the flow rate of the raw water or the treatment water such that an error in the material balance for each of the unit icons is equal to or less than a predetermined specified value.

16. The water treatment calculation program according to any one of claims 13 to 15, wherein
the unit B configured to estimate at least one item among the flow rate, the water quality, the temperature, and the water pressure of the treatment water for each of the unit icons according to the calculation order estimates,
when the water treatment process flow includes a mixing unit icon having at least two or more inflow wirings, and
when a flow rate, a water quality, a temperature, and a water pressure of at least one of the inflow wirings of the unit icon are determined by input or calculation, and any one or more of a flow rate, a water quality, a temperature, and a water pressure of at least another inflow wiring are not determined,
at least one item among the flow rate, the water quality, the temperature, and the water pressure of the treatment water by inputting any one or more of the flow rate, the water quality, the temperature, and the water pressure of the inflow wiring for which the flow rate, the water quality, the temperature, and the water pressure are determined to the inflow wiring for which any one or more of the flow rate, the water quality, the temperature, and the water pressure are not determined.

17. The water treatment calculation program according to any one of claims 13 to 16, wherein
in the unit A configured to determine the calculation order of the unit icons,
the wiring is wired along a direction of the water treatment process, and
the unit A determines the calculation order along the direction of the wiring, and determines the calculation order without omission for all the unit icons forming the water treatment process flow.

18. The water treatment calculation program according to any one of claims 13 to 17, wherein
the unit A configured to determine the calculation order of the unit icons prevents a calculation order of a unit icon from overlapping a calculation order of another unit icon.

19. The water treatment calculation program according to any one of claims 13 to 18, wherein
the unit A configured to determine the calculation order of the unit icons prevents, when a calculation order is set for a unit icon, the calculation order from being overwritten.

20. The water treatment calculation program according to any one of claims 13 to 19, wherein
the unit icon is at least one of the following 1 to 7:
1. water flow (raw water, product water, and wastewater);
2. water treatment device (sedimentation separation, flotation separation, centrifugation separation, coagulation treatment, stirring treatment, aerobic treatment, anaerobic treatment, filtration, squeezing, filter cloth, microfiltration membrane, ultrafiltration membrane, nanofiltration membrane, reverse osmosis membrane, accelerated oxidation, ion exchange, adsorption, absorption, deaeration, crystallization, distillation, heat exchange, and mineral addition);
3. energy recovery device (reverse pump type, water turbine type, pressure exchange type, and turbocharger);
4. chemical liquid injection device;
5. deaeration device;
6. equipment (pump, blower, and compressor); and
7. piping connections (mixing and branch).

21. The water treatment calculation program according to any one of claims 13 to 20, wherein
when the water treatment process includes at least one raw water unit icon, and at least one product water unit icon or at least one wastewater unit icon,
the unit A configured to determine the calculation order of the unit icons includes the following units A1 to A5:
A1. a unit configured to select one raw water unit icon, set "1" to the calculation order of the selected raw water unit icon, then cancel the selection of the raw water unit icon, select a unit icon immediately downstream of the raw water unit icon by passing through an outflow wiring coming out of the raw water unit icon, and proceed to the following unit A2;
A2. a unit configured to set a value obtained by adding 1 to a maximum value of all the calculation order set for the unit icons forming the water treatment process flow in the calculation order of the unit icon selected in any one of the unit A1 and units A4 and A5 to be described later, and proceed to the following unit A3;
A3. a unit configured to proceed to the following unit A4 when the unit icon selected in any one of the unit A1 and units A4 and A5 to be described later is not the product water unit icon or the wastewater unit icon, and cancel the selection of the unit icon when the unit icon selected in any one of the unit A1 and units A4 and A5 to be described later is the product water unit icon or the wastewater unit icon and proceed to the following unit A5;
A4. a unit configured to cancel the selection of the unit icon selected in any one of the units A1 and A4, and a unit A5 to be described later, select a unit icon immediately downstream of the unit icon by passing through one outflow wiring coming out of the unit icon, and proceed to the unit A2; and
A5. a unit configured to select, when there is an unpassed outflow wiring that flows out from a unit icon whose calculation order is determined in the water treatment process flow, a unit icon into which the unpassed outflow wiring flows, and proceed to the unit A2, and end the unit A when there is no unpassed outflow wiring that flows out from a unit icon whose calculation order is determined.

22. The water treatment calculation program according to any one of claims 13 to 21, wherein
when the water treatment process flow includes a circulating wiring,
the computer is further caused to function as the following unit A6 after the unit A4, and
the unit A5 selects, when there is the unpassed outflow wiring that flows out from the unit icon whose calculation order is determined, the unit icon into which the unpassed outflow wiring flows, and proceeds to the unit A6:
A6. a unit configured to proceed to the unit A5 when the calculation order of the unit icon selected in any one of the units A1, A4, and A5 is determined, and proceed to the unit A2 when the calculation order of the unit icon selected in any one of the units A1, A4, and A5 is not determined.

23. The water treatment calculation program according to any one of claims 13 to 22, wherein
when the water treatment process flow includes two or more raw water unit icons,
the unit A5 further causes the computer to function as the following unit A7 to which the process proceeds when there is no unit icon whose calculation order is not determined immediately downstream of the unit icon whose calculation order is determined, and
each of the units A2, A3, A4, and A6 is directed to a unit icon selected in any one of the units A1, A4, A5, and A7:
A7. a unit configured to select, when there is a raw water unit icon whose calculation order is not determined in the water treatment process flow, the raw water unit icon, and proceed to the unit A2, and
end the unit A when there is no raw water unit icon whose calculation order is not determined.

24. The water treatment calculation program according to any one of claims 13 to 23, wherein
the unit D determines that the repeated execution of the units B and C is necessary until at least one or both of a case in which an error in the material balance of the water treatment process flow is equal to or less than a predetermined specified value and a case in which a difference between a previous estimation result and an estimation result of the unit B in at least one of the product water unit icon and the wastewater unit icon is equal to or less than a predetermined specified value are satisfied.

25. A computer-readable recording medium storing the water treatment calculation program according to any one of claims 13 to 24.

26. A water treatment process calculation system, wherein
the recording medium according to claim 25 is a server, and a water treatment process is calculable by accessing the server via a browser.
